(19) **Europäisches Patentamt**

**European Patent Office**

**Office européen des brevets**

(11) Veröffentlichungsnummer: **0 048 417 B1**

(12) # EUROPÄISCHE PATENTSCHRIFT

(45) Veröffentlichungstag der Patentschrift:
09.05.84

(51) Int. Cl.³: **E 01 C 7/18,** E 01 C 11/24, C 04 B 35/10

(21) Anmeldenummer: 81107209.9

(22) Anmeldetag: 12.09.81

(54) **Material auf Rotschlammbasis für den Strassenbau.**

(30) Priorität: 20.09.80 DE 3035598
20.09.80 DE 3035626

(43) Veröffentlichungstag der Anmeldung:
31.03.82 Patentblatt 82/13

(45) Bekanntmachung des Hinweises auf die Patenterteilung:
09.05.84 Patentblatt 84/19

(84) Benannte Vertragsstaaten:
AT BE CH DE FR GB IT LI LU NL SE

(56) Entgegenhaltungen:
DE - C - 1 805 829
US - A - 3 985 567

(73) Patentinhaber: MANNESMANN Aktiengesellschaft, Mannesmannufer 2 Postfach 5501, D-4000 Düsseldorf 1 (DE)
Patentinhaber: Alcoa Chemie GmbH, Giulinistrasse 2, D-6700 Ludwigshafen (DE)

(72) Erfinder: Bayer, Gerhard, verstorben, D-6700 Ludwigshafen/Rhein (DE)
Erfinder: Siegmund, Werner, Ing. (grad.), Oberdorfstrasse 17, D-6901 Heiligkreuz/Steinach (DE)

(74) Vertreter: Benatzky, Erika, Dr., Giulinistrasse 2, D-6700 Ludwigshafen/Rh. (DE)

## Beschreibung

Gegenstand der vorliegenden Erfindung ist Material auf Rotschlammbasis, seine Verwendung beim Strassendeckenbau sowie ein Verfahren zu seiner Herstellung.

Die Herstellung eines Materials auf der Basis von Rotschlamm zur Verwendung als Füller in bituminösen Massen für den Strassenbau ist bekannt, z.B. aus der DE-C 18 05 829. Gemäss dieser Patentschrift ist der Rotschlamm für den vorstehenden Zweck dann besonders geeignet, wenn er vor der Abtrennung von der Restaluminatlauge mit 3 bis 10 Gew.-%, als CaO berechnet und bezogen auf den trockenen Rotschlamm, Kalk in Form von gebranntem oder gelöschtem Kalk versetzt wird. Der abfiltrierte Rotschlamm wird dann in üblicher Weise getrocknet und vermahlen. Ergänzend zum Stand der Technik wird noch auf die DE-C 23 06 145 verwiesen, die ein Zusatz zum gattungsbildenden Patent 18 05 829 ist, in der durch ein vorteilhaftes Rocknungsverfahren, nämlich die Zerstäubungstrocknung, die Dosierbarkeit dieses bekannten Füllstoffes, auch als Rotfüller bezeichnet, verbessert wird. Ein Hinweis zur Aufbereitung des Rotschlamms unter Gelbildung kann diesen Druckschriften nicht entnommen werden.

Aus der US-C 3 985 567 ist schliesslich noch die Neutralisation von Rotschlamm mit Säuren bekannt. Dabei wird so vorgegangen, dass der getrocknete Rotschlamm zunächst in Wasser suspendiert wird. Anschliessend wird soviel Salzsäure zugegeben, bis sich das im Rotschlamm vorhandene Natrium als Natriumchlorid gelöst hat und vom Rotschlamm abgetrennt werden kann. Der Rotschlamm wird dann gewaschen, getrocknet und mit Ton zu Ziegeln verarbeitet.

Überraschenderweise hat sich nunmehr gezeigt, dass ein Füller auf Rotschlammbasis für Strassendecken weit besser und wirtschaftlicher hergestellt werden kann, wenn die im Rotschlamm enthaltenen Alkalien unter Bildung von gelförmigem Aluminiumhydroxid und Alkalisalzen ganz oder teilweise neutralisiert werden und das gebildete Umsetzungsprodukt getrocknet und anschliessend vermahlen wird. Werden auch die in Form von Natriumaluminiumsilikaten im Rotschlamm enthaltenen Alkalien neutralisiert, so wird neben dem Aluminiumhydroxid und den Alkalisalzen gleichzeitig gelförmiges Siliziumdioxid gebildet. In nicht vorhersehbarer Weise ist der Aluminiumhydroxidgel enthaltende Füller für Strassendecken sehr gut geeignet. Das Endprodukt ist staubfrei. Die Herstellungsweise ist einfach und billig.

Der beim Bayer-Aufschluss als Abfallprodukt anfallende Rotschlamm (Bauxitrückstand) enthält in Abhängigkeit vom Waschprozess bis zu 1,5 Gew.-% Alkali (ber. als NaOH) in Form von wasserlöslichem Natriumaluminat und 3 bis 13 Gew.-% Alkalien in Form von Natriumaluminiumsilikat ($Na_2O \cdot Al_2O_3 \cdot 2SiO_2$). Bei der Neutralisation wird das Natriumaluminiumsilikat unter Ausscheidung von gelförmigem $SiO_2$, gelförmigem $Al(OH)_3$ und dem entsprechenden Natriumsalz zersetzt.

Als Neutralisationsmittel werden hierbei vorteilhafterweise saure Aluminiumsalze eingesetzt, insbesondere Aluminiumchlorid. Die Verwendung dieses Salzes ist wegen der zusätzlichen Bildung von gelförmigem $Al(OH)_3$ von besonderem Vorteil. Anstelle von Aluminiumchlorid können selbstverständlich auch andere Aluminiumsalze eingesetzt werden, etwa Aluminiumsulfat und Aluminiumnitrat.

Ein weiterer Vorteil des erfindungsgemässen Verfahrens wird darin gesehen, dass zur Neutralisation auch Säuren, gegebenenfalls billige Abfallsäuren, eingesetzt werden können, insbesondere Salzsäure, Schwefelsäure oder Gemische dieser Säuren.

Der Rotschlamm wird bei dem neuen Verfahren zweckmässigerweise filterfeucht verwendet, also mit einem Restwassergehalt von 35 bis 50 Gew.-%. In diesem Zustand besitzt der Rotschlamm eine pastenförmige Konsistenz. Das Aluminiumsalz wird zweckmässigerweise in gelöster Form in den Rotschlamm eingearbeitet. Bei Aufhebung der Schereinwirkung erstarrt die Rotschlammsuspension zu einem Gel. Nach Trocknung des Gels, z.B. in einem Drehtrommeltrockner bei Temperaturen oberhalb 100 °C, liegt ein stückiges Gut vor, das nach Abkühlung auf eine Korngrösse von <1 mm vermahlen wird. Das Mahlprodukt ist nicht hygroskopisch, gut rieselfähig und zeigt ein sehr gutes Bindungsvermögen mit Bitumen oder Asphalt. Durch Zugabe von höheren Kohlenwasserstoffen, beispielsweise Heizöl oder Dieselöl, vor der Vermahlung zum Trockengut kann das Bindungsvermögen des Füllers noch erhöht werden. Die Menge des Neutralisationsmittels ist nach oben durch den Alkaligehalt des Rotschlamms begrenzt. Sie wird zweckmässigerweise jeweils auf die gewünschte Gelkonsistenz abgestellt.

In diesem Zusammenhang muss es weiterhin als überraschend bezeichnet werden, dass der vorstehende Füller auf Rotschlammbasis bei Zugabe von frosthemmenden Mitteln, insbesondere Natriumchlorid, einen ausgezeichneten frosthemmenden Zuschlagstoff für den Strassenbau ergibt. Dabei ist es wesentlich, dass die im Rotschlamm enthaltenen Alkalien erst nach Zugabe des frosthemmenden Mittels neutralisiert werden. In nicht vorhersehbarer Weise verzögert nämlich das Aluminiumhydroxidgel auf dem frosthemmenden Zuschlagstoff den Zutritt des Wassers zu dem frosthemmenden Mittel und damit seine vorzeitige Auflösung, so dass der Zusatz kostspieliger Hydrophobierungsmittel entfällt. Die Chancen für den praktischen Einsatz frosthemmender Mittel im Strassenbau haben sich damit wesentlich erhöht.

Die Verwendung von Aluminiumchlorid als Neutralisationsmittel ist wegen der gleichzeitigen Bildung von gelförmigem $Al(OH)_3$ und Natriumchlorid von besonderem Vorteil, da das Chlorid als frosthemmender Zusatz bereits im Rotschlamm vorhanden ist. Ausserdem wird auf diese Weise der Gelanteil erhöht. Bei Zugabe von festem Natriumchlorid verflüssigt sich der Rotschlamm, so dass sich das saure Aluminiumsalz in gelöster oder fester Form leicht in die Rotschlammsuspension einarbeiten lässt, die bei Aufhebung der Schereinwirkung zu einem Gel erstarrt.

Die Menge des zugesetzten kristallinen Natriumchlorids beträgt etwa das 2- bis 3-fache des Rotschlammes, bezogen auf Trockenrückstand des Rotschlammes. Die Menge des Neutralisationsmittels ist nach oben durch den Alkaligehalt des Rotschlammes begrenzt. Sie wird zweckmässigerweise jeweils auf die gewünschte Gelkonsistenz abgestellt.

Anhand der nachstehenden Beispiele wird der Erfindungsgegenstand noch erläutert:

Beispiel 1

Ausgangsstoff ist ein filterfeuchter Rotschlamm mit einem Wassergehalt von 46,3% und einem Gesamt-$Na_2O$-Anteil von 6,1% (bezogen auf Trockengewicht). 1,1% $Na_2O$ liegen in Form von löslichem Natriumaluminat und 4,9% $Na_2O$ als unlösliches Natriumaluminiumsilikat vor.

2000 kg obigen Rotschlammes wurden einer intensiven Rührbehandlung unterworfen, dabei entstand eine flüssige Maische. In diese Maische wurden 45 kg $AlCl_3$ in Form von 20%iger Lösung zugesetzt. Nach 5 Min. Kontaktzeit bildete sich eine Paste, die in einem Trommeltrockner bei einer Temperatur von 145 °C ohne Anbackungserscheinungen getrocknet wurde. Dem Trocknungsgut wurden anschliessend 5% Dieselöl zugemischt und auf eine Korngrösse <1 mm vermahlen. Der Dieselölzusatz beeinflusste nicht die guten Mahleigenschaften des Trockengutes. Es wurde ein nichtstäubendes Produkt mit sehr guten Füllereigenschaften erhalten.

Beispiel 2

1000 kg Rotschlamm nach Beispiel 1 wurden in einem Zwangsmischer hohen Scherkräften ausgesetzt, wobei eine flüssige Maische entstand. Der Maische wurden 45 kg $H_2SO_4$ in Form 40%iger Schwefelsäure zugemischt. Unter Wärmeentwicklung trat nach 4 Min. eine Verfestigung zu einem pastenförmigen Material ein. Die Paste wurde in einem Trommeltrockner bei einer Temperatur von 140 °C getrocknet, wobei im Trockner selbst keine Verbackungen eintraten. Das Trockengut liess sich nach Zugabe von 5% Dieselöl ohne Staubentwicklung auf eine Korngrösse <1 mm gut vermahlen. Das Produkt wies einen pH-Wert von 6,0 auf und zeigte hervorragende Füllereigenschaften bei Einsatz im Strassenbau.

Beispiel 3

Ausgangspunkt ist ein Rotschlamm mit einem Wassergehalt von 42% und einem $Na_2O$-Gehalt von 6,1% (bezogen auf Trockengewicht). 1,1% $Na_2O$ liegen als Natriumaluminat und 5% $Na_2O$ in Form von Natriumaluminiumsilikat vor.

100 g dieses Rotschlammes werden mit 100 kg Kochsalz innig vermischt; es entsteht eine flüssige Maische. In diese Maische werden 20 kg Aluminiumchloridlösung (entsprechend 4,7 kg $AlCl_3$) eingemischt. Unter Wärmeentwicklung bildet sich eine Paste, die ohne Anbackungen in einem Trommeltrockner bei 130 °C getrocknet werden kann. Das Trockengut ist nicht hygroskopisch und zeigt bei der Vermahlung auf eine Korngrösse <1 mm gute Mahleigenschaften. Werden dem Trockengut vor der Mahlung 5% Dieselöl zugesetzt, so wird die Staubbildung herabgesetzt, wobei die Mahleigenschaften nicht verschlechtert werden.

Beispiel 4

100 kg Rotschlamm nach Beispiel 3 werden nach Zusatz von 100 kg Kochsalz einer Mischbehandlung unterworfen, wobei ein Flüssiggemisch entsteht. In die Maische werden 10 kg HCl 36%ig eingemischt. Unter Wärmeentwicklung tritt eine Verfestigung zu einer stichfesten Masse ein. Das Reaktionsprodukt wird in einem Trommeltrockner bei 140 °C getrocknet und nach Zugabe von 6% leichtem Heizöl auf eine Korngrösse <1 mm vermahlen. Das Trockengut lässt sich in Mischung mit leichtem Heizöl bei geringer Staubbildung sehr gut vermahlen.

Abschliessend wird noch erwähnt, dass ein nach den Beispielen hergestellter Zuschlagstoff in einer bituminösen Strassendecke etwa 4 bis 5% betragen sollte. Es kann dann mit der gewünschten Gefrierpunktserniedrigung des Oberflächenwassers gerechnet werden.

**Patentansprüche**

1. Material auf Rotschlammbasis für den Strassendeckenbau, dadurch gekennzeichnet, dass der Rotschlamm gelförmiges Aluminiumhydroxid und Alkalisalze enthält, wobei beide Bestandteile bei mindestens teilweiser Neutralisation der im Rotschlamm enthaltenen Alkalien entstanden sind.

2. Material nach Anspruch 1, dadurch gekennzeichnet, dass der Rotschlamm zusätzlich gelförmiges Siliziumdioxid enthält.

3. Material nach Anspruch 1, dadurch gekennzeichnet, dass der Rotschlamm gelförmiges Aluminiumhydroxid enthält, das bei der Neutralisation der im Rotschlamm in Form von Natriumaluminat enthaltenen gelösten Alkalien entstanden ist.

4. Material nach den Ansprüchen 2 und 3, dadurch gekennzeichnet, dass der Rotschlamm gelförmige Hydroxide enthält, die bei der Neutralisation der im Rotschlamm in Form von Natriumaluminat enthaltenen gelösten Alkalien und der in Form von Natriumaluminiumsilikate enthaltenen ungelösten Alkalien entstanden sind.

5. Material nach den Ansprüchen 1 bis 4, dadurch gekennzeichnet, dass der Rotschlamm zusätzlich ein frosthemmendes Mittel, insbesondere Natriumchlorid, enthält.

6. Material nach den Ansprüchen 1 bis 5, dadurch gekennzeichnet, dass es eine Korngrösse <1 mm aufweist.

7. Material nach den Ansprüchen 1 bis 6, dadurch gekennzeichnet, dass an die Körner höhere Kohlenwasserstoffe angelagert sind.

8. Material nach den Ansprüchen 1 bis 7, dadurch gekennzeichnet, dass an die Körner Dieselöl angelagert ist.

9. Verfahren zur Herstellung eines Materials nach den Ansprüchen 1 bis 4 und 6 bis 8, dadurch gekennzeichnet, das

a) dem Rotschlamm unter Rühren ein Mittel zur Neutralisation der im Rotschlamm enthaltenen Alkalien zugegeben wird,

b) das bei der Neutralisation gebildete Gel getrocknet und anschliessend vermahlen wird.

10. Verfahren zur Herstellung eines Materials nach Anspruch 5, dadurch gekennzeichnet, dass

a) Rotschlamm mit einem frosthemmenden Mittel, insbesondere Natriumchlorid versetzt wird, dass

b) zu dieser Mischung unter Rühren ein Mittel zur Neutralisation der im Rotschlamm enthaltenen Alkalien zugegeben wird,

c) das bei der Neutralisation gebildete Gel getrocknet und anschliessend vermahlen wird.

11. Verfahren nach Anspruch 9 und 10, dadurch gekennzeichnet, dass die im Rotschlamm in Form von Natriumaluminat gelösten Alkalien neutralisiert werden.

12. Verfahren nach den Ansprüchen 9 bis 11, dadurch gekennzeichnet, dass die im Rotschlamm in Form von Natriumaluminiumsilikat enthaltenen Alkalien neutralisiert werden.

13. Verfahren nach den Ansprüchen 9 bis 12, dadurch gekennzeichnet, dass die Neutralisation mit einem sauren Aluminiumsalz durchgeführt wird, insbesondere mit Aluminiumchlorid und/oder Aluminiumsulfat.

14. Verfahren nach den Ansprüchen 9 bis 12, dadurch gekennzeichnet, dass die Neutralisation mit einer anorganischen Säure, insbesondere Salzsäure oder Schwefelsäure durchgeführt wird.

15. Verfahren nach den Ansprüchen 13 und 14, dadurch gekennzeichnet, dass die Neutralisation mit einer Mischung aus einem sauren Aluminiumsalz und einer anorganischen Säure durchgeführt wird.

16. Verfahren nach den Ansprüchen 9 bis 15, dadurch gekennzeichnet, dass ein Rotschlamm mit einer Restfeuchte von 35 bis 50 Gew.-% eingesetzt wird.

17. Verfahren nach den Ansprüchen 9 bis 16, dadurch gekennzeichnet, dass dem getrockneten Material vor der Vermahlung ein höherer Kohlenwasserstoff zugesetzt wird.

18. Verfahren nach Anspruch 17, dadurch gekennzeichnet, dass dem getrockneten Material vor der Vermahlung Dieselöl zugesetzt wird.

19. Verwendung des Materials nach den Ansprüchen 1 bis 4 und 6 bis 8 als Füller.

20. Verwendung des Materials nach den Ansprüchen 1 bis 8 als frosthemmender Zuschlagstoff.

## Revendications

1. Matériau à base de boue rouge pour la construction des revêtements de routes, caractérisé en ce que la boue rouge contient des sels alcalins et de l'hydroxyde d'aluminium sous forme d'un gel, les deux constituants étant formés lors de la neutralisation au moins partielle des alcalis contenus dans la boue rouge.

2. Matériau suivant la revendication 1, caractérisé en ce que la boue rouge contient, en outre, du dioxyde de silicium sous forme d'un gel.

3. Matériau suivant la revendication 1, caractérisé en ce que la boue rouge contient de l'hydroxyde d'aluminium sous forme d'un gel se formant lors de la neutralisation des alcalis dissous contenus sous forme d'aluminate de sodium dans la boue rouge.

4. Matériau suivant les revendications 2 et 3, caractérisé en ce que la boue rouge contient des hydroxydes sous forme de gels se formant lors de la neutralisation des alcalis dissous contenus sous forme d'aluminate de sodium dans la boue rouge, ainsi que des alcalis nos dissous contenus sous forme de silicate, de sodium-aluminium.

5. Matériau suivant les revendications 1 à 4, caractérisé en ce que la boue rouge contient, en outre, un agent antigel, en particulier, le chlorure de sodium.

6. Matériau suivant les revendications 1 à 5, caractérisé en ce qu'il a une granularité de <1 mm.

7. Matériau suivant les revendications 1 à 6, caractérisé en ce que des hydrocarbures supérieurs sont fixés par addition sur les grains.

8. Matériau suivant les revendications 1 à 7, caractérisé en ce que du carburant Diesel est fixé par addition sur les grains.

9. Procédé de préparation d'un matériau suivant les revendications 1 à 4 et 6 à 8, caractérisé en ce que:

a) tout en agitant, à la boue rouge, on ajoute un agent pour la neutralisation des alcalis contenus dans la boue rouge,

b) on sèche le gel formé lors de la neutralisation, puis on le broie.

10. Procédé de préparation d'un matériau suivant la revendication 5, caractérisé en ce que:

a) à la boue rouge, on ajoute un agent antigel, en particulier, le chlorure de sodium,

b) tout en agitant, à ce mélange, on ajoute un agent pour la neutralisation des alcalis contenus dans la boue rouge,

c) on sèche le gel formé lors de la neutralisation, puis on le broie.

11. Procédé suivant les revendications 9 et 10, caractérisé en ce qu'on neutralise les alcalis dissous sous forme d'aluminate de sodium dans la boue rouge.

12. Procédé suivant les revendications 9 à 11, caractérisé en ce qu'on neutralise les alcalis contenus sous forme de silicate de sodium-aluminium dans la boue rouge.

13. Procédé suivant les revendications 9 à 12, caractérisé en ce qu'on effectue la neutralisation avec un sel d'aluminium acide, en particulier, avec le chlorure d'aluminium et/ou le sulfate d'aluminium.

14. Procédé suivant les revendications 9 à 12, caractérisé en ce qu 'on effectue la neutralisation avec un acide inorganique, en particulier, l'acide chlorhydrique ou l'acide sulfurique.

15. Procédé suivant les revendications 13 et 14, caractérisé en ce qu'on effectue la neutralisation avec un mélange d'un sel d'aluminium acide et d'un acide inorganique.

16. Procédé suivant les revendications 9 à 15, caractérisé en ce qu'on utilise une boue rouge ayant une humidité résiduelle de 35 à 50% en poids.

17. Procédé suivant les revendications 9 à 16, caractérisé en ce que, avant le broyage, on ajoute un hydrocarbure supérieur au matériau séché.

18. Procédé suivant la revendication 17, caractérisé en ce que, avant le broyage, on ajoute du carburant Diesel au matériau séché.

19. Utilisation du matériau suivant les revendications 1 à 4 et 6 à 8 comme charge.

20. Utilisation du matériau suivant les revendications 1 à 8 comme additif antigel.

## Claims

1. A material based on red mud for the construction of road covering, wherein the red mud contains gel-like aluminium hydroxide and alkali metal salts, both components being formed with an at least partial neutralization of the alkalis contained in the red mud.

2. A material according to claim 1, wherein the red mud additionally contains gel-like silicon dioxide.

3. A material according to claim 1, wherein the red mud contains gel-like aluminium hydroxide, formed during the neutralization of the dissolved alkalis contained in the red mud in the form of sodium aluminate.

4. A material according to claim 2 and 3, wherein the red mud contains gel-like hydroxides, formed during the neutralization of the dissolved alkalis contained in the red mud in the form of sodium aluminate and the undissolved alkalis contained in the form of sodium aluminosilicate.

5. A material according to claims 1 to 4, wherein the red mud also contains a frost-resisting agent, particularly sodium chloride.

6. A material according to claims 1 to 5, wherein it has a particle size of <1 mm.

7. A material according to claims 1 to 6, wherein higher hydrocarbons are attached to the particles.

8. A material according to claims 1 to 7, wherein diesel oil is attached to the particles.

9. A process for the preparation of the material according to claims 1 to 4 and 6 to 8, wherein

a) an agent for neutralizing the alkalis contained in the red mud is added to the latter accompanied by stirring,

b) the gel formed during the neutralization is dried and subsequently ground.

10. A process for the preparation of the material according to claim 5, wherein

a) red mud is mixed with a frost-resisting agent, particularly sodium chloride,

b) an agent for neutralizing the alkalis contained in the red mud is added to this mixture accompanied by stirring, and

c) the gel formed during neutralization is dried and subsequently ground.

11. A process according to claims 9 and 10, wherein the alkalis dissolved in the form of sodium aluminate in the red mud are neutralized.

12. A process according to claims 9 to 11, wherein the alkalis contained in the form of sodium aluminosilicate in the red mud are neutralized.

13. A process according to claims 9 to 12, wherein neutralization is carried out with an acid aluminium salt, particularly with aluminium chloride and/or aluminium sulphate.

14. A process according to claims 9 to 12, wherein the neutralization is carried out with an inorganic acid, particularly hydrochloric acid or sulphuric acid.

15. A process according to claims 13 and 14, wherein neutralization is carried out with an acid aluminium salt and an inorganic acid.

16. A process according to claims 9 to 15, wherein a red mud with a residual moisture content of 35 to 50% by weight is used.

17. A process according to claims 9 to 16, wherein a higher hydrocarbon is added to the dried material prior to grinding.

18. A process according to claim 17, wherein diesel oil is added to the dried material prior to grinding.

19. A use of the material according to claims 1 to 4, and 6 to 8 as a filler.

20. A use of the material according to claims 1 to 8 as a frost-resisting aggregate.